# EUROPÄISCHE PATENTSCHRIFT

(11) **EP 4 108 551 B1**
(45) Veröffentlichungstag und Bekanntmachung des Hinweises auf die Patenterteilung: **15.11.2023**
(21) Anmeldenummer: 21181080.9
(22) Anmeldetag: 23.06.2021
(51) Int. Cl.: B62D 21/17, B62D 33/04

(54) **KOFFERAUFBAU EINES NUTZFAHRZEUGS MIT EINEM ECKADAPTER ZUR BILDUNG EINES VERBINDUNGSKANALS**
LUGGAGE COMPARTMENT OF A COMMERCIAL VEHICLE WITH A CORNER ADAPTER FOR FORMING A CONNECTION CHANNEL
STRUCTURE DE CAISSE D'UN VÉHICULE UTILITAIRE DOTÉ D'UN ADAPTATEUR D'ANGLE POUR FORMER UN CANAL DE CONNEXION

(43) Veröffentlichungstag der Anmeldung: 28.12.2022
(73) Patentinhaber: Schmitz Cargobull AG, 48341 Altenberge (DE)
(72) Erfinder: Beelmann, Reinhard, 45721 Haltern am See (DE)
(74) Vertreter: Cohausz & Florack

(56) Entgegenhaltungen:
- EP-A1- 3 683 124
- EP-A2- 2 070 806
- DE-A1-102018 114 101

## Beschreibung

Die Erfindung betrifft einen Kofferaufbau eines Nutzfahrzeugs, insbesondere Lastkraftwagen, Anhänger oder Sattelauflieger, mit wenigstens zwei miteinander wenigstens im Wesentlichen rechtwinklig verbundenen und einen Laderaum begrenzenden Paneelen, wobei die wenigstens zwei Paneele jeweils eine dem Laderaum zugeordnete innere strukturgebende Decklage, eine vom Laderaum abgewandte äußere strukturgebende Decklage und eine zwischen der inneren Decklage und der äußeren Decklage vorgesehene Kernlage aufweisen und wobei die wenigstens zwei Paneele jeweils wenigstens einen in die Kernlage eingefügten Kanal zur Aufnahme einer elektrischen, pneumatischen oder hydraulischen Leitung aufweisen.

Nutzfahrzeuge sind in unterschiedlichen Ausgestaltungen, etwa in Form von Lastkraftwagen, Anhängern oder Sattelaufliegern, bekannt. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge ein Chassis, ein mit dem Chassis verbundenes Fahrwerk und einen von dem Chassis getragenen Aufbau auf, welcher einen Laderaum bereitstellt für die Aufnahme der zu transportierenden Ladung. So sind beispielsweise Planenaufbauten bekannt, die wenigstens eine Plane zum Verschließen wenigstens einer Seite und/oder eines Dachs des Planenaufbaus aufweisen. Wenn eine Plane entlang einer Seitenwand verschoben werden kann, spricht man auch von sogenannten Curtainsidern.

Im Gegensatz dazu sind bei sogenannten Kofferaufbauten die Seitenwände und das Dach durch feste Wände verschlossen. Zudem ist rückwärtig ein Türrahmen in Form eines Rückwandrahmens vorgesehen, an dem zwei Türen in Form von Rückwandtüren gehalten und in dem in der geschlossenen Stellung der Türen die Türen aufgenommen sind. Gegenüber von dem Rückwandrahmen ist eine Stirnwand vorgesehen. Dabei können entsprechende Stirnwände und Rückwände in gleicher Weise bei Planenaufbauten und bei Kofferaufbauten vorgesehen sein.

Bei Kofferaufbauten können die Seitenwände, das Dach, die Stirnwand, der Boden und/oder die Türen in Form von mehrschichtigen Paneelen aufgebaut sein, die innere und äußere strukturgebende Decklagen und dazwischen eine Kernlage aus geschäumtem Kunststoff umfassen. Die entsprechenden Decklagen können bedarfsweise selbst jeweils mehrlagig ausgebildet sein und dienen der Aussteifung der Paneele, weshalb die Decklagen meist wenigstens eine Schicht aus einem Metall und/oder einem faserverstärkten Kunststoff aufweisen. Die einzelnen Paneele eines Kofferaufbaus werden typischerweise jeweils über Eck miteinander verbunden, um einen quaderförmigen Kofferaufbau zu bilden.

Da die Kernlage der Paneele aus einem geschäumten Kunststoff eine hohe thermische Isolation bereitstellen kann, sind entsprechende Kofferaufbauten insbesondere auch für den Transport von temperaturempfindlichen Gütern, also beispielsweise für den sogenannten Kühltransport, geeignet. Dieselben Kofferaufbauten können auch für den Transport von feuchtigkeitsempfindlichen Gütern, also den sogenannten Trockentransport, verwendet werden.

Kofferaufbauten werden zunehmend mit elektrischen oder elektronischen Funktionskomponenten, wie etwa Leuchten oder Sensoren, versehen, die mithin über wenigstens eine elektrische oder eine optische Leitung angeschlossen werden müssen. In einigen Fällen werden die Funktionskomponenten und/oder die Leitungen auf der Innenseite der inneren Decklage verlegt. Die Funktionskomponenten und/oder die Leitungen verlaufen mithin im Laderaum, wo diese beim Be- und Entladen des Laderaums leicht beschädigt werden können. Um dies zu vermeiden, ist bereits vorgeschlagen worden, die Funktionskomponenten und/oder die Leitungen in die Kernlage eines Paneels des Kofferaufbaus einzulassen. Bei diesem Paneel handelt sich meist um ein Seitenwandpaneel oder ein Dachpaneel des Kofferaufbaus. Die Leitungen verlaufen dann zudem meist nach vorne, wo sie mit einer Spannungsversorgung, einem Steuergerät oder dergleichen verbunden werden.

In seltenen Fällen werden auch pneumatische oder hydraulische Leitungen zu pneumatischen bzw. hydraulischen Funktionskomponenten verlegt. Beispielsweise könnte es sich bei entsprechenden Funktionskomponenten um ein Rolltor an der Rückwand des Aufbaus oder eine Ladebordwandsteuerung, insbesondere einen Schalter zur Betätigung der Ladebordwand, handeln. Dies erfolgt prinzipiell auch nach dem zuvor beschriebenen Prinzip. Das Verlegen von entsprechenden Leitungen ist grundsätzlich mit einem hohen Fertigungsaufwand und damit mit hohen Kosten verbunden. Dies ist umso mehr der Fall, wenn die Länge der Leitungen aus funktionalen Gründen oder aus Kostengründen gering gehalten werden soll. Ein Kofferaufbau mit den Merkmalen der Präambel von Anspruch 1 wird in der DE 10 2018 114101 gezeigt.

Daher liegt der vorliegenden Erfindung die Aufgabe zugrunde, den eingangs genannten und zuvor näher erläuterten Kofferaufbau derart auszugestalten und weiterzubilden, dass mit Funktionskomponenten versehene Kofferaufbauten mit einem geringeren Fertigungsaufwand zu geringeren Kosten gefertigt werden können. Diese Aufgabe ist bei einem Kofferaufbau nach dem Oberbegriff von Anspruch 1 dadurch gelöst, dass die wenigstens zwei Kanäle der wenigstens zwei Paneele untereinander über korrespondierend ausgebildete, angrenzend zueinander angeordnete und wenigstens im Wesentlichen in den Kernlagen der wenigstens zwei Paneele aufgenommenen Eckadapter unter Bildung eines gemeinsamen Verbindungskanals verbunden sind.

Erfindungsgemäß ist also vorgesehen, dass wenigstens zwei miteinander über Eck verbundene Paneele jeweils einen Kanal zur Aufnahme einer elektrischen, optischen, pneumatischen oder hydraulischen Leitung aufweisen und dass diese beiden Kanäle über Eck miteinander verbunden werden. Zu diesem Zweck weisen die Paneele Eckadapter auf, die korrespondierend zueinander ausgebildet und angrenzend zueinander angeordnet sind. Dies erlaubt es mittels der Eckadapter einen gemeinsamen Verbindungskanal auszubilden, der sich von einem Paneel zu einem angrenzenden Paneel und mit dem ersten Paneel wenigstens im Wesentlichen rechtwinklig verbundenen zweiten Paneel über die entsprechende Eckverbindung erstreckt. Da die entsprechenden Eckadapter wenigstens im Wesentlichen in den Kernlagen der beiden Paneele angeordnet sind, kann der Laderaum von dem Verbindungskanal wenigstens im Wesentlichen unbeeinträchtigt bleiben. Der Verbindungskanal kann also so vorgesehen werden, dass die Eckadapter nicht oder nur unwesentlich in den Laderaum hineinragen.

Wenn die Eckadapter wenigstens im Wesentlichen in den Kernlagen der angrenzenden Paneele aufgenommen sind, können diese zusammen mit den Kanälen vorkonfektioniert werden. Die Kanäle und Eckadapter können dazu beispielsweise in die Kernlage eingeschäumt werden. Unabhängig davon kann aber durch das Zusammensetzen von Paneelen zu einem Kofferaufbau gleichzeitig ein gemeinsamer Verbindungskanal gebildet werden, wenn die Eckadapter zuvor so in den Kernlagen der Paneele positioniert worden sind, dass die korrespondierend ausgebildeten Eckadapter bei der Fertigung des Kofferaufbaus infolge der entsprechenden Ausrichtung der Paneele zueinander auch angrenzend zueinander positioniert werden. Es kommt also zu einer zwangsweisen Ausbildung des gemeinsamen Verbindungskanals, wenn die Eckadapter zuvor an den richtigen Positionen in den Kernlagen der Paneele vorgesehen worden sind. Die Eckadapter führen mithin die Kanäle der Paneele in den Eckbereichen der Paneele fort und verbinden diese in den Eckbereichen der Paneele zu gemeinsamen Verbindungskanälen.

Dabei können die Eckadapter sowohl einstückig mit den Kanälen ausgebildet sein oder als separate Bauteile ausgebildet und beispielsweise fest mit den Kanälen verbunden werden. Im Regelfall wird eine mehrteilige Ausgestaltung von Eckadapter und Kanälen zweckmäßig sowie einfacher sowie flexibler zu realisieren sein. Es kommt hier primär auf die Bildung des gemeinsamen Verbindungskanals an. Ein solcher gemeinsamer Verbindungskanal ließe sich beispielsweise auch dann realisieren, wenn zwei in den benachbarten Paneelen vorgesehene einstückige Leerrohre so im Verbindungsbereich der Paneele enden würden, dass die Endabschnitte dieser Leerrohre einen gemeinsamen Verbindungskanal für eine durch den Verbindungskanal hindurchzuführende Leitung bilden. Die Endabschnitte der einstückigen Leerrohre könnten dann als die angesprochenen Eckadapter angesehen werden, weil die Endabschnitte typischerweise an den gegenüberliegenden Endabschnitt anzupassen wären.

Durch den gemeinsamen Verbindungskanal und die auf beiden Seiten einstückig oder über separate Verbindungen angeschlossenen Kanäle können nach dem Zusammenbau der Paneele zu einem Kofferaufbau Leitungen hindurchgeführt werden, um mit diesen Leitungen Funktionskomponenten anzuschließen. Die Kanäle und der gemeinsame Verbindungskanal können also bedarfsweise als Leerrohre verstanden werden, die ein nachträgliches Installieren wenigstens einer Leitung erlauben, nachdem die Paneele des Kofferaufbaus zu dem Kofferaufbau zusammengesetzt worden sind.

Dabei ist nur von untergeordneter Bedeutung, ob es sich bei den Leitungen um elektrische Leitungen, elektronische Leitungen, optische Leitungen, pneumatische Leitungen oder hydraulische Leitungen handelt. In diesem Zusammenhang werden unter den elektrischen, elektronischen und optischen Leitungen insgesamt auch mögliche Signalleitungen verstanden. Bei den elektrischen Leitungen kann es sich auch um solche zur Stromversorgung handeln. Der Einfachheit halber wird im folgenden nicht zwischen elektrischen und elektronischen Leitungen unterschieden, weil diese Unterscheidung fließend ist und der Fachmann die jeweiligen Leitungen für die jeweiligen Anwendungen ohnehin verlegen wird, und zwar unabhängig davon, in welcher Weise diese Leitungen vorliegend im Einzelnen definiert werden würden.

Bei einer ersten besonders bevorzugten Ausgestaltung des Kofferaufbaus ist ein Paneel der wenigstens zwei Paneele ein Seitenwandpaneel, wobei das wenigstens eine andere Paneel wahlweise ein Dachpaneel, ein Bodenpaneel oder ein Stirnwandpaneel sein kann. Auf diese Weise kann also ein gemeinsamer Verbindungskanal zwischen dem Seitenwandpaneel und wenigstens einem weiteren Paneel gebildet werden, bei dem es sich um ein Dachpaneel, ein Bodenpaneel oder ein Stirnwandpaneel handeln kann. Mithin kann der wenigstens eine Kanal des wenigstens einen Seitenwandpaneels bedarfsweise mit einem Kanal eines der anderen Paneele oder mit Kanälen von mehreren der anderen Paneele verbunden werden. Dabei ist es alternativ oder zusätzlich möglich, dass das wenigstens eine Paneel der wenigstens zwei Paneele ein Stirnwandpaneel ist und das wenigstens eine andere Paneel ein Dachpaneel, ein Bodenpaneel oder ein Seitenwandpaneel ist. Auf diese Weise kann analog ein gemeinsamer Verbindungskanal zwischen dem Stirnwandpaneel und wenigstens einem weiteren Paneel gebildet werden, bei dem es sich um eine Dachpaneel, ein Bodenpaneel oder ein Seitenwandpaneel handeln kann. Somit kann wenigstens ein Kanal der Stirnwand mit wenigstens einem Kanal wenigstens eines weiteren Paneels oder mit Kanälen unterschiedlicher Paneele verbunden werden.

Um das Verlegen der wenigstens einen Leitung durch den wenigstens einen aus den korrespondierenden Eckadaptern gebildeten gemeinsamen Verbindungskanal zu erleichtern, bietet es sich an, wenn die korrespondierenden Eckadapter wenigstens abschnittsweise einen bündigen Übergang der beiden Kanäle ineinander bereitstellen. Wenn dieser bündige Übergang an einer geeigneten Stelle vorgesehen wird, kann eine Leitung von einem Eckadapter in den angrenzenden Eckadapter eingeschoben werden, ohne dass die Leitung gegen eine Kante des angrenzenden Eckadapters stößt und so ein weiteres Einschieben der Leitung blockiert. Dies kann insbesondere dann erreicht werden, wenn der bündige Übergang zwischen den Eckadaptern an der dem Laderaum abgewandten Seite der Eckadapter vorgesehen wird.

Alternativ oder zusätzlich kann der wenigstens eine Eckadapter an der dem Laderaum abgewandten Seite bogenförmig mit einer Führungsfläche zum Führen der Leitung in Richtung des Kanals des angrenzenden Eckadapters ausgebildet sein. Dann kann die durch den gemeinsamen Verbindungskanal zu führende Leitung zuverlässig über Eck von einem Paneel in das angrenzende Paneel geführt werden. Dabei ist es besonders bevorzugt, wenn die bodenförmige Führungsfläche an beiden miteinander vorgesehenen Eckadaptern vorgesehen ist. Unabhängig davon ist es auch bevorzugt, wenn die wenigstens eine bogenförmige Führungsfläche im Bereich des bündigen Übergangs zwischen den beiden angrenzenden Eckadaptern vorgesehen ist. Dann kommt es nicht zu einem formschlüssigen Blockieren der Leitung an einem Eckadapter beim Einschieben der Leitung in den Eckadapter und kann die Leitung schrittweise geführt von einer Paneelebene in die angrenzende, wenigstens im Wesentlichen rechtwinklig zu dieser Paneelebene angeordnete andere Paneelebene umgebogen werden.

Wenn die Querschnitte der aneinandergrenzenden Öffnungen der Eckadapter wenigstens im Wesentlichen fluchtend zueinander ausgerichtet sind, dann ist die Gefahr, dass es beim Hindurchschieben der wenigstens einen Leitung durch den gemeinsamen Verbindungskanal zu einem formschlüssigen Blockieren kommt, weiter verringert. Dies ist insbesondere dann von Vorteil, wenn die Leitung recht flexibel ist und kaum vorherbestimmt werden kann, wo die Leitung an den Rand der Eckadapter anstoßen wird.

Wenn im Vorhinein festgelegt ist, von welchem Eckadapter die wenigstens eine Leitung in den anderen, angrenzenden Eckadapter eingeschoben werden soll, kann es sich anbieten, wenn ein Querschnitt der aneinandergrenzenden Öffnungen der Eckadapter den anderen Querschnitt in einer Projektion der Querschnitte senkrecht zu wenigstens einem der Querschnitte vollständig umfasst. Die Leitung sollte dann in der Richtung von dem engeren Querschnitt zu dem weiteren Querschnitt der angrenzenden Öffnungen der angrenzenden Eckadapter durch den gemeinsamen Verbindungskanal hindurchgeschoben werden. Ein Anstoßen der Leitung an einem Rand einer Öffnung ist dann nicht zu befürchten. Dies gilt insbesondere dann, wenn der Querschnitt der einen Öffnung des einen Eckadapters in Bezug auf die angrenzende Öffnung des anderen angrenzenden Eckadapters einen um die Öffnung umlaufenden Hinterschnitt bildet. Es kann also an den aneinander angrenzenden Öffnungen in einer Richtung zu einer umlaufenden, sprunghaften Erweiterung des Querschnitts kommen.

Um nach dem Verbinden der Paneele untereinander zu einem Kofferaufbau die Leitungen in einfacher Weise durch den wenigstens einen gemeinsamen Verbindungskanal verlegen zu können, kann es zweckmäßig sein, wenn wenigstens einem Eckadapter eine mit einem Deckelelement verschlossene Zugangsöffnung zum Kanal zugeordnet ist. Über das Deckelelement kann der Monteur dann Zugang zu dem gemeinsamen Verbindungskanal erhalten und die wenigstens eine Leitung durch diesen gemeinsamen Verbindungskanal hindurchführen. Da dieser Zugang nur während des Verlegens der wenigstens einen Leitung erforderlich ist, kann das Deckelelement von einer die Zugangsöffnung abdeckenden geschlossenen Stellung in eine die Zugangsöffnung freigebende geöffnete Stellung und zurück verstellbar vorgesehen sein. So kann verhindert werden, dass Dreck oder Feuchtigkeit in die Kanäle eindringt. Die Kanäle können so nicht blockieren und die Funktion der Funktionskomponenten kann so gewährleistet werden.

Es kann nicht nur wünschenswert sein, die wenigstens eine Leitung nachträglich zu montieren oder auszutauschen. Dasselbe kann auch für wenigstens eine Funktionskomponente wünschenswert sein. Dann bietet es sich an, wenn in wenigstens einem Paneel beabstandet von dem zugehörigen Eckadapter wenigstens im Wesentlichen in der Kernlage ein an den wenigstens einen Kanal angeschlossenes Gehäuseelement zur Montage einer Funktionskomponente darin vorgesehen ist. Die Funktionskomponente kann dann nach dem Zusammenbau des Kofferaufbaus aus den einzelnen Paneelen in dem bereits vorgesehenen Gehäuseelement montiert werden. Abhängig von der Art der Funktionselemente kann es besonders bevorzugt sein, wenn in jedem der beiden über den gemeinsamen Verbindungskanal verbundenen Paneele beabstandet von dem zugehörigen Eckadapter wenigstens im Wesentlichen in der Kernlage ein an den wenigstens einen Kanal angeschlossenes Gehäuseelement zur Montage einer Funktionskomponente darin vorgesehen ist. Damit die Funktionskomponente in geeigneter Weise montiert werden kann und eine versehentliche Beschädigung des wenigstens einen Gehäuseelements bzw. der wenigstens einen Funktionskomponente beim Be- und Entladen des Kofferaufbaus vermieden wird, kann das jeweilige Gehäuseelement wenigstens im Wesentlichen bündig in die innere Decklage eingelassen sein.

Um die Montage einer Funktionskomponente weiter zu vereinfachen kann dem wenigstens einen Gehäuseelement eine mit einem Deckelelement verschlossene Zugangsöffnung zum Kanal zugeordnet sein. Das Deckelelement sollte dann von einer die Zugangsöffnung abdeckenden geschlossenen Stellung in eine die Zugangsöffnung freigebende geöffnete Stellung und bedarfsweise zurück verstellbar vorgesehen sein. Auf diese Weise kann entweder das Deckelelement abgenommen werden und dann anstelle des Deckelelements die Funktionskomponente in dem Gehäuseelement montiert werden. Es kann aber auch das Deckelelement in die die Zugangsöffnung freigebende geöffnete Stellung verstellt werden, um die Funktionskomponente im Gehäuseelement zu montieren. Anschließend kann das Deckelelement bedarfsweise wieder in die die Zugangsöffnung abdeckende geschlossene Stellung zurück verstellt werden. Dann ist die Funktionskomponente geschützt eingebaut, was jedoch die Funktion der Funktionskomponente nicht nachhaltig beeinträchtigen sollte.

Die Vorteile des Kofferaufbaus kommen in besonderem Maße zum Tragen, wenn ein Paneel mit wenigstens zwei angrenzenden Paneelen wenigstens im Wesentlichen rechtwinklig verbundenen ist. Die wenigstens drei entsprechenden Paneele können dann jeweils wenigstens einen in einer Kernlage zwischen einer strukturgebenden äußeren Decklage und einer strukturgebenden inneren Decklage eingefügten Kanal zur Aufnahme einer Leitung aufweisen. Die Kanäle der wenigstens drei Paneele können dann untereinander jeweils über korrespondierend ausgebildete und angrenzend zueinander angeordnete Eckadapter unter Bildung von wenigstens zwei gemeinsamen Verbindungskanälen verbunden sein, um eine Leitung über zwei unterschiedliche Ecken entlang der wenigstens drei Paneele zu führen. Dies ist in besonderem Maße bevorzugt, wenn das wenigstens eine Paneel auf einander gegenüberliegenden Rändern des einen Paneels mit angrenzenden Paneelen wenigstens im Wesentlichen rechtwinklig verbundenen wird. Auf diese Weise kann grundsätzlich die erforderliche Leitungslänge, insbesondere zwischen Funktionskomponenten von unterschiedlichen Paneelen, verkürzt werden. Dies kann insbesondere dann von Vorteil sein, wenn die Leitungen zwischen den Funktionskomponenten wenigstens auch als Signalleitungen ausgebildet sind, um die Signalübertragung nicht zu beeinträchtigen.

Im Zusammenhang mit der Einsparung unnötiger Leitungslängen kann es sich also anbieten, wenn in jedem der wenigstens drei Paneele beabstandet von dem jeweils wenigstens einen zugehörigen Eckadapter wenigstens im Wesentlichen in der Kernlage ein an den wenigstens einen Kanal angeschlossenes Gehäuseelement zur Montage einer Funktionskomponente vorgesehen ist. Dabei kann es für die Montage der Gehäuseelemente ebenso wie für die Montage der Funktionskomponenten von Vorteil sein, wenn das jeweilige Gehäuseelement bündig in die jeweilige innere Decklage eingelassen ist. Das jeweilige Gehäuseelement und die jeweilige Funktionskomponente kann dann nahe dem Laderaum vorgesehen werden, ohne beim Be- und Entladen beschädigt zu werden. Die Funktionskomponente kann bedarfsweise aber auch gegenüber dem Gehäuseelement und/oder der inneren Decklage in den Laderaum vorstehen, wenn dies gewünscht ist.

Für bestimmte Anwendungen kann es zur Vermeidung unnötiger Leitungslängen in analoger Weise bevorzugt sein, wenn vier Paneele an jeweils einander gegenüberliegenden Rändern mit jeweils zwei der anderen drei Paneele wenigstens im Wesentlichen rechtwinklig verbunden sind. Auch in diesem Falle weisen die vier Paneele vorzugsweise jeweils wenigstens einen in einer Kernlage zwischen einer strukturgebenden äußeren Decklage und einer strukturgebenden inneren Decklage eingefügten Kanal zur Aufnahme einer Leitung auf. Zudem können die Kanäle der wenigstens vier Paneele untereinander über korrespondierend ausgebildete und angrenzend zueinander angeordnete Eckadapter unter Bildung von wenigstens drei gemeinsamen Verbindungskanälen verbunden sein.

Dies bietet sich in besonderem Maße an, wenn in jedem der vier Paneele beabstandet von dem jeweils wenigstens einen zugehörigen Eckadapter wenigstens im Wesentlichen in der Kernlage ein an den wenigstens einen Kanal angeschlossenes Gehäuseelement zur Montage einer Funktionskomponente darin vorgesehen ist. So können die Funktionskomponenten einfach und zweckdienlich auf die vier aneinander angrenzenden Paneele verteilt werden. Dabei kann es für die Montage der Gehäuseelemente ebenso wie für die Montage der Funktionskomponenten von Vorteil sein, wenn das jeweilige Gehäuseelement bündig in die jeweilige innere Decklage eingelassen ist. Das jeweilige Gehäuseelement und die jeweilige Funktionskomponente kann dann nahe dem Laderaum vorgesehen werden, ohne beim Be- und Entladen beschädigt zu werden.

Wenn die Kanäle der vier Paneele einen umlaufenden, ununterbrochenen Kanal bilden, kann bedarfsweise die Leitungslänge verringert werden. Insbesondere können bedarfsweise die Funktionskomponenten mit sehr kurzen Leitungslängen miteinander verbunden werden.

Die Vorteile des Kofferaufbaus kommen in besonderem Maße zum Tragen, wenn wenigstens eine Leitung durch den wenigstens einen Verbindungskanal der wenigstens zwei Paneele hindurchgeführt ist. Auf diese Weise kann ein einfaches Anschließen von Funktionskomponenten mit geringen Leitungslängen realisiert werden. Dies ist noch umso mehr der Fall, wenn die wenigstens eine Leitung nacheinander durch wenigstens zwei, vorzugsweise wenigstens drei, insbesondere wenigstens vier, Verbindungskanäle hindurchgeführt ist.

Alternativ oder zusätzlich kommen die Vorteile des Kofferaufbaus besonders zum Tragen, wenn in dem wenigstens einem Gehäuseelement wenigstens eine Funktionskomponente vorgesehen ist. Diese ist dann nicht nur einfach zu montieren, sondern auch über den wenigstens einen Kanal einfach anzuschließen. Dies gilt noch umso mehr, wenn in allen Gehäuseelementen wenigstens eine Funktionskomponente vorgesehen ist. Dabei kann die wenigstens eine Funktionskomponente oder können die mehreren Funktionskomponenten über die wenigstens eine Leitung miteinander verbunden sein, um unnötige Leitungslängen zu vermeiden.

Die Vorteile des Kofferaufbaus sind dann von besonderer Bedeutung, wenn es sich bei der wenigstens einen Leitung um eine elektrische Leitung, eine elektronische Leitung, eine optische Leitung, eine pneumatische und/oder eine hydraulische Leitung handelt. Insbesondere im Falle von elektronischen Leitungen und/oder Signalleitungen ist es zur Vermeidung von Verlusten zweckdienlich, wenn die Leitungslängen möglichst kurz ausfallen. Als Leitungen kommen dabei aber alle gängigen Arten von Leitungen in Frage. Es kann sich beispielsweise um einadrige oder mehradrige Kupferkabel, Glasfaserkabel, Koaxialkabel, Netzwerkkabel und dergleichen handeln. Es kommen aber auch übliche Leitungen zum Transport von Gasen und Flüssigkeiten in Frage, die bevorzugt ein Mindestmaß an Flexibilität aufweisen sollten, um das Verlegen der Leitungen zu vereinfachen.

Bei der wenigstens einen Funktionskomponente kann es sich um eine Leuchte, um einen Scanner oder um eine Sender- und Empfängereinheit zum Detektieren von passiven oder aktiven RFID-Chips (Radio-Frequency Identification Chips) handeln. Es kommen aber auch elektrische bzw. elektronische Funktionskomponenten in Form von Schaltern, Sensoren, Aktoren sowie pneumatische Funktionskomponenten in Form von Rolltorbetätigungen oder hydraulische Funktionskomponenten in Form von Ladebordwänden in Frage.

Nachfolgend wird die Erfindung anhand einer lediglich Ausführungsbeispiele darstellenden Zeichnung näher erläutert. In der Zeichnung zeigt
- Fig. 1: ein Nutzfahrzeug mit einem ersten erfindungsgemäßen Kofferaufbau in einer perspektivischen Ansicht,
- Fig. 2: ein Detail des Kofferaufbaus aus Fig. 1 in einer Schnittansicht quer zum Laderaum,
- Fig. 3A-B: ein Detail der Verbindung zwischen einem Seitenwandpaneel und dem Dachpaneel des Kofferaufbaus aus Fig. 1 in einer Schnittansicht,
- Fig. 4A-B: ein Detail der Verbindung zwischen einem Seitenwandpaneel und dem Dachpaneel eines zweiten erfindungsgemäßen Kofferaufbaus in einer Schnittansicht und
- Fig. 5: ein Detail eines Paneels des Kofferaufbaus aus Fig. 1 in einer Schnittansicht.

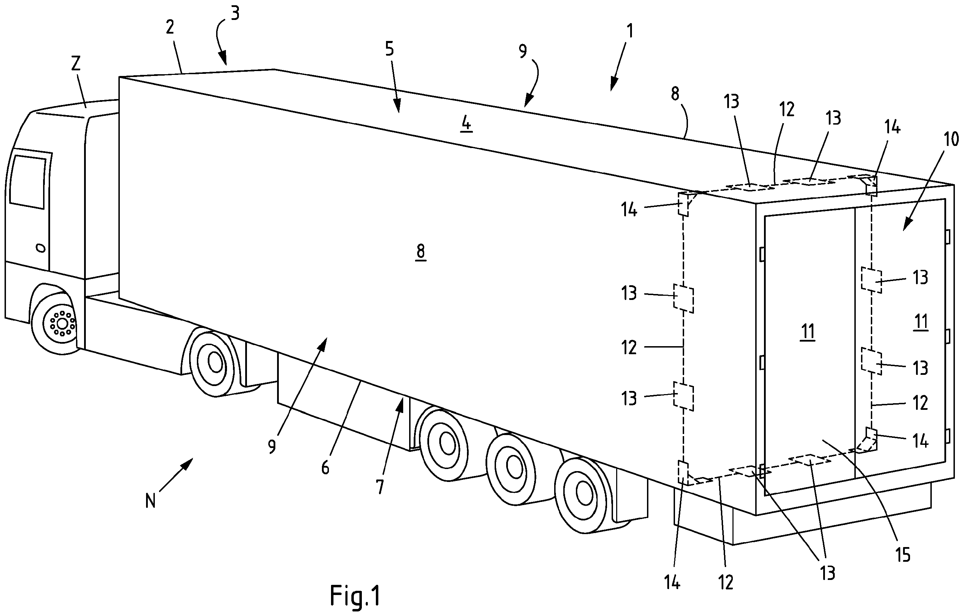

In der Fig. 1 ist ein Nutzfahrzeug N in Form eines Sattelaufliegers dargestellt, das von einer Zugmaschine Z gezogen wird. Das Nutzfahrzeug N umfasst ein Chassis, ein Fahrgestell und einen Kofferaufbau 1. Der Kofferaufbau 1 wiederum umfasst eine Stirnwand 2 aus einem Stirnwandpaneel 3, ein Dach 4 aus einem Dachpaneel 5 einen Boden 6 aus einem Bodenpaneel 7 und zwei Seitenwände 8 aus jeweils einem Seitenwandpaneel 9. Die Rückwand 10 wird aus zwei Rückwandtüren 11 gebildet, die jeweils in Form eines Türpaneels ausgebildet sind. Die Seitenwandpaneele 9, das Dachpaneel 5, das Bodenpaneel 7 und das Stirnwandpaneel 3 sind untereinander jeweils wenigstens im Wesentlichen rechtwinklig, also über Eck, miteinander verbunden. Im hinteren Bereich des Kofferaufbaus 1 sind in die Seitenwandpaneele 9, in das Dachpaneel 5 und in das Bodenpaneel 7 Kanäle 12 und Gehäuseelemente 13 eingelassen, wobei die Kanäle 12 der Seitenwandpaneele 9, des Dachpaneels 5 und des Bodenpaneels 7 jeweils über gemeinsame Verbindungskanäle 14 verbunden sind. In die Gehäuseelemente 13 können Sensoren montiert und über die Kanäle 12 an Leitungen angeschlossen sowie miteinander verbunden werden.

Diese Sensoren können dabei die in den Kofferaufbau 1 eingeladene und ausgeladene Ladung erfassen. Hierzu können an der Ladung beispielsweise RFID-Chips oder geeignete Sender angebracht werden. Auf diese Weise kann erfasst und auch dokumentiert werden, ob, wann und wo eine bestimmten Ladung in den Kofferaufbau 1 eingeladen worden und/oder ausgeladen worden ist. Eine Ladungsnachverfolgung kann auf diese Weise sehr einfach und zuverlässig bereitgestellt werden. Dabei ist jedoch in einigen Fällen darauf zu achten, dass die einzelnen Sensoren über kurze Leitungen miteinander verbunden werden, um die entsprechende Signalleitung nicht zu beeinträchtigen. Von einem Gehäuseelement 13 kann zudem eine Leitung zu einer nicht dargestellten zentralen Steuereinheit, etwa einer Telematikeinheit, verlegt werden. Dabei kann in dem einen Gehäuseelement 13 eine Signalumwandlung erfolgen, so dass die Signale ohne nennenswerte Verluste über eine längere Strecke über eine entsprechende, nicht dargestellte Leitung geleitet werden können. Dies kann zweckmäßig sein, wenn die Telematikeinheit der Stirnwand 2 des Kofferaufbaus 1 zugeordnet ist.

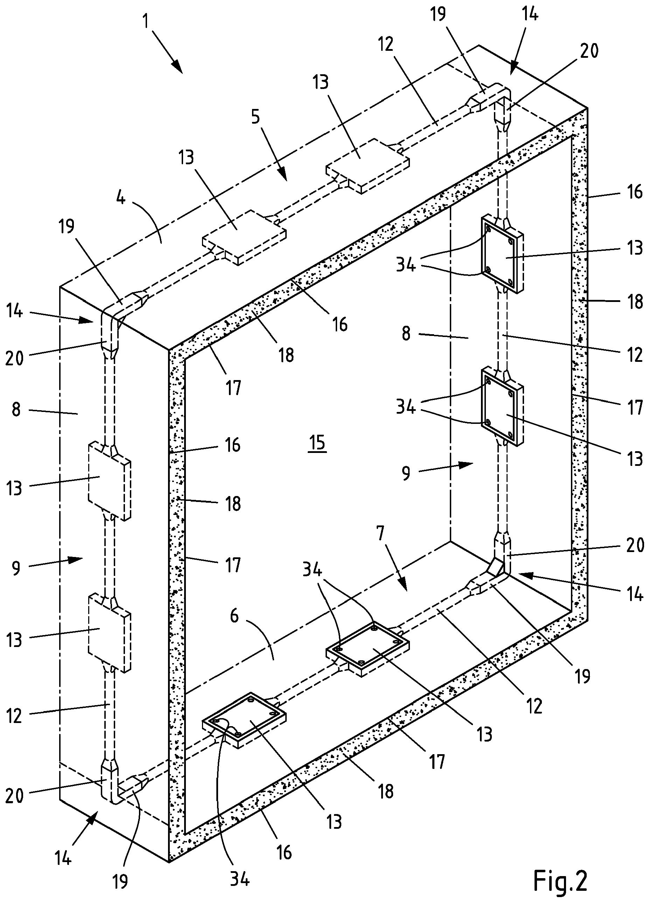

In der Fig. 2 ist ein Ausschnitt des Kofferaufbaus 1 aus der Fig. 1 in diesem hinteren Bereich in einer Schnittansicht dargestellt. Die beiden Seitenwandpaneele 9, das Dachpaneel 5 und das Bodenpaneel 7 umfassen auf der dem Laderaum 15 abgewandten Seite eine strukturgebende äußere Decklage 16 und auf der dem Laderaum 15 zugewandten Seite eine strukturgebende innere Decklage 17. Dabei ist jeweils zwischen der äußeren Decklage 16 und der inneren Decklage 17 eines Seitenwandpaneels 9, des Dachpaneels 5 und des Bodenpaneels 7 eine Kernlage 18 vorgesehen. Bei dem dargestellten und insoweit bevorzugten Kofferaufbau 1 wird die Kernlage 18 wenigstens im Wesentlichen durch einen geschäumten Kunststoff gebildet, bei dem es sich um ein Polyurethan handeln kann. Die äußeren Decklagen 16 und die inneren Decklagen 17 werden im Wesentlichen durch Stahlbleche gebildet. Es kämen aber auch andere Materialien wie Aluminium in Frage. Zudem könnte wenigstens eine Lage der strukturgebenden Decklagen 16,17 aus einem, insbesondere faserverstärkten, Kunststoff gebildet werden. Im Falle eines Kunststoffs bieten sich Verbundwerkstoffe als Decklagen 16,17 an. Diese können unterschiedliche, bedarfsweise faserverstärkte Kunststoffe, wenigstens eine Lage aus Stahlblech und/oder wenigstens eine Lage aus Aluminium umfassen.

In den Kernlagen 18 des dargestellten und soweit bevorzugten Seitenwandpaneels 9, Dachpaneels 5 und des Bodenpaneels 7 sind jeweils Kanäle 12 eingebracht, insbesondere eingeschäumt. Die dargestellten und insoweit bevorzugten Kanäle 12 erstrecken sich zudem parallel zu dem jeweiligen Seitenwandpaneel 9, Dachpaneel 5 oder Bodenpaneel 7 sowie jeweils quer zur Längserstreckung des Kofferaufbaus 1. Zudem sind in jedem Seitenwandpaneel 9, dem Dachpaneel 5 und dem Bodenpaneel 7 zwei Gehäuseelemente 13 wenigstens im Wesentlichen in die jeweilige Kernlage 18 eingebracht. Die Gehäuseelemente 13 sind dabei über die Kanäle 12 des entsprechenden Seitenwandpaneels 9, Dachpaneels 5 oder Bodenpaneels 7 miteinander verbunden. Im Übrigen sind die Kanäle 12 des entsprechenden Seitenwandpaneels 9, Dachpaneels 5 oder Bodenpaneels 7 mit dem Kanal 12 des jeweils angrenzenden Seitenwandpaneels 9, Dachpaneels 5 oder Bodenpaneels 7 über jeweils zwei aneinander angrenzende und korrespondierend ausgebildete Eckadapter 19,20 miteinander verbunden, wobei die beiden jeweils angrenzenden Eckadapter 19,20 jeweils einen gemeinsamen Verbindungskanal 14 bilden.

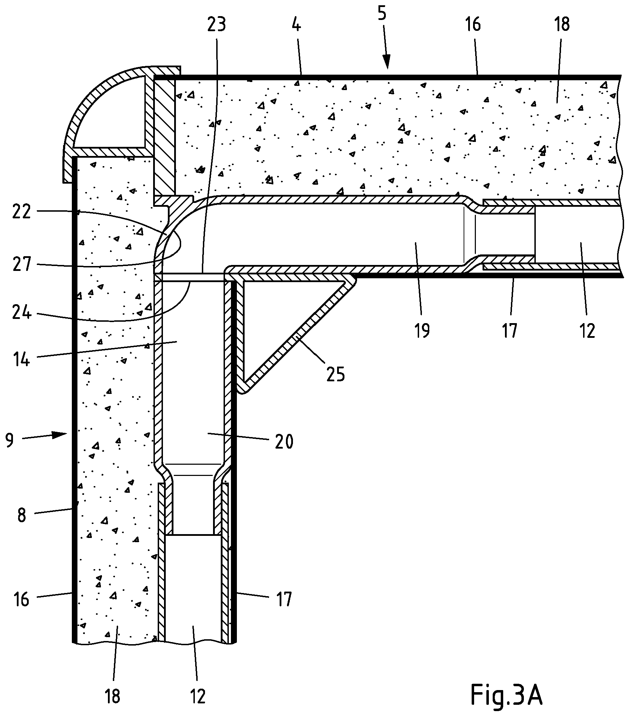

In den Fig. 3A-B sind exemplarisch korrespondierende Eckadapter 19,20 und ein durch die Eckadapter 19,20 gebildeter gemeinsamer Verbindungskanal 14 im Verbindungsbereich eines Seitenwandpaneels 9 und eines Dachpaneels 5 dargestellt. Die übrigen Eckadapter 19,20 und gemeinsamen Verbindungskanäle 14 des Kofferaufbaus 1 sind dabei analog ausgebildet. In dem Dachpaneel 5 ist ein Kanal 12 in der Kernlage 18 zwischen der äußeren Decklage 16 und der inneren Decklage 17 vorgesehen und zwar benachbart zu der inneren Decklage 17. Im Randbereich des Dachpaneels 5 ist der Kanal 12 in der Kernlage 18 mit einem Eckadapter 19 verbunden, der einen Umlenkbereich 22 für eine Leitung umfasst und in eine Öffnung 23 mündet, die nach unten in Richtung des Seitenwandpaneels 9 weist. Dabei ist der Eckadapter 19 des Dachpaneels 5 in den Kanal 12 des Dachpaneels 5 eingesteckt.

Im Seitenwandpaneel 9 ist ein korrespondierender Eckadapter 20 in der Kernlage 18 des Seitenwandpaneels 9 zwischen dessen äußerer Decklage 16 und dessen innerer Decklage 17 vorgesehen, und zwar mit einer Öffnung 24 die nach oben in Richtung des Dachpaneels 5 weist. Die beiden Öffnungen 23,24 der korrespondierenden Eckadapter 19,20 weisen dabei eine übereinstimmende Größe und einen übereinstimmenden Querschnitt auf. Die Querschnitte sind parallele zueinander angeordnet. Bei dem dargestellten und insoweit bevorzugten Eckadapter 20 des Seitenwandpaneels 9 ist ein Winkelelement 25 vorgesehen, das sich an der Innenseite des Seitenwandpaneels 9 und der Innenseite des Dachpaneels 5 abstützt. Der Eckadapter 20 des Seitenwandpaneels 9 ist ähnlich zu dem Eckadapter 19 des Dachpaneels 5 in den Kanal 12 des Seitenwandpaneels 9 eingesteckt, wobei der Kanal 12 des Seitenwandpaneels 9 benachbart zu der inneren Decklage 17 des Seitenwandpaneels 9 in der Kernlage 18 des Seitenwandpaneels 9 angeorndet ist. Alternativ wäre es aber auch denkbar, dass die Eckadapter 19,20 zusammen mit den zugehörigen Kanälen 12 einstückig ausgebildet sind. Eine separate Verbindung zwischen den Eckadaptern 19,20 und den Kanälen 12 könnte dann entfallen. Beispielsweise könnten die Eckadapter 19,20 und die Kanäle 12 jeweils aus einem einzigen, bedarfsweise in bestimmten Abschnitten gebogenen, Rohr gebildet werden. Die Fertigung eines solchen gebogenen Rohrs kann aber aufwendiger werden als die Verbindung separater Eckadapter 19,20 mit den zugehörigen Kanälen 12.

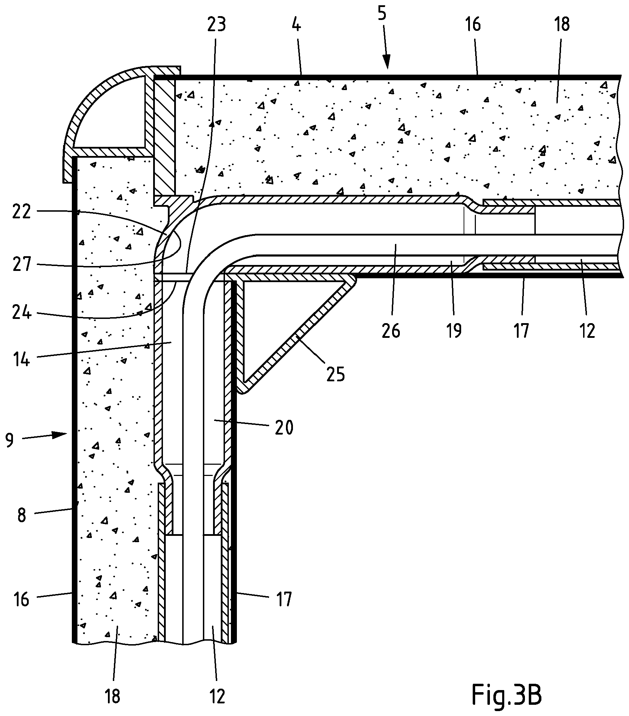

Die beiden Eckadapter 19,20 bilden einen gemeinsamen Verbindungskanal 14, durch den anschließend eine Leitung 26 hindurchgeschoben werden kann, wie dies in der Fig. 3B dargestellt ist. Um dies zu vereinfachen weisen die korrespondierenden Eckadapter 19,20 umlaufend einen bündigen Übergang im Bereich der aneinander angrenzenden Öffnungen 23,24 auf. Zudem ist der Eckadapter 19 des Dachpaneels 5 auf der dem Laderaum 15 abgewandten Seite des Eckadapters 19 im Übergang zu dem angrenzenden Eckadapter 20 des Seitenwandpaneels 9 bogenförmig ausgebildet, so dass sich dort eine bogenförmige Führungsfläche 27 ausbildet, die dem Führen der Leitung 26 von einem Kanal 12 in den angrenzenden Kanal 12 dienlich ist.

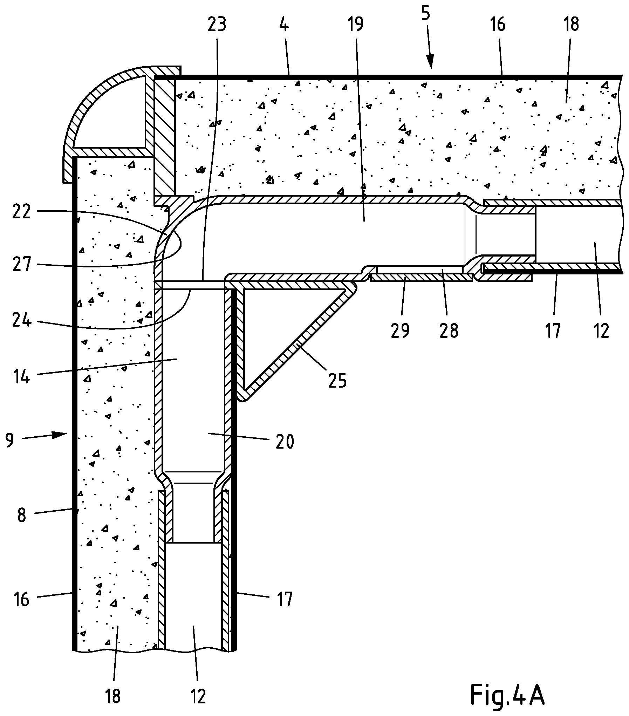

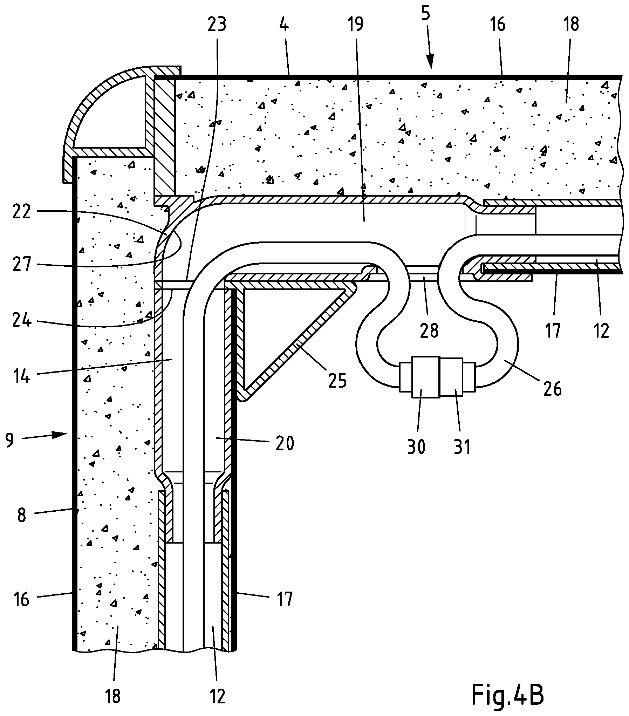

In den Fig. 4A-B ist ein alternativer Verbindungsbereich zwischen einem Dachpaneel 5 und einem Seitenwandpaneel 9 im Vergleich zu dem Verbindungsbereich aus den Fig. 3A-B dargestellt. Der wesentliche Unterschied besteht dabei darin, dass in dem Eckadapter 19 des Dachpaneels 5 eine Zugangsöffnung 28 zum Inneren des Eckadapters 19 und damit zum Kanal 12 des Dachpaneels 5 vorgesehen ist. Diese Zugangsöffnung 28 ist vom Laderaum 15 aus zugänglich und in der Fig. 4A mit einem Deckelelement 29 verschlossen dargestellt. Das Deckelelement 29 kann von der in der Fig. 4A dargestellten, die Zugangsöffnung 28 abdeckenden geschlossenen Stellung in eine in der Fig. 4B dargestellte, die Zugangsöffnung 28 freigebende geöffnete Stellung und zurück verstellbar vorgesehen sein. Bei dem dargestellten und insoweit bevorzugten Eckadapter 19 des Dachpaneels 5 kann das Deckelelement 29 in der geöffneten Stellung vollständig entfernt werden, um das Einschieben einer Leitung 26 oder das Verbinden zweier Leitungsenden 30,31 zu vereinfachen. Anschließend lässt sich das Deckelelement 29 aber wieder in die die Zugangsöffnung 28 abdeckende geschlossene Stellung zurückverstellen. Dabei kann das Deckelelement 29 bedarfsweises im Wege einer Rastverbindung oder einer andern Verbindung mit dem zugehörigen Eckadapter 19 verbunden werden.

Es versteht sich, dass die Eckadapter 19 des Dachpaneels 5 in den Fig. 3A bis Fig. 4B auch im Seitenwandpaneel 9 und die Eckadapter 20 des Seitenwandpaneels 9 im Dachpaneel 5 vorgesehen sein könnten. Zudem können die Eckadapter 19,20 in den anderen Verbindungsbereichen zwischen den Seitenwandpaneelen 9, dem Bodenpaneel 7 und dem Dachpaneel 5 in gleicher oder aber in abgewandelter Form vorgesehen sein.

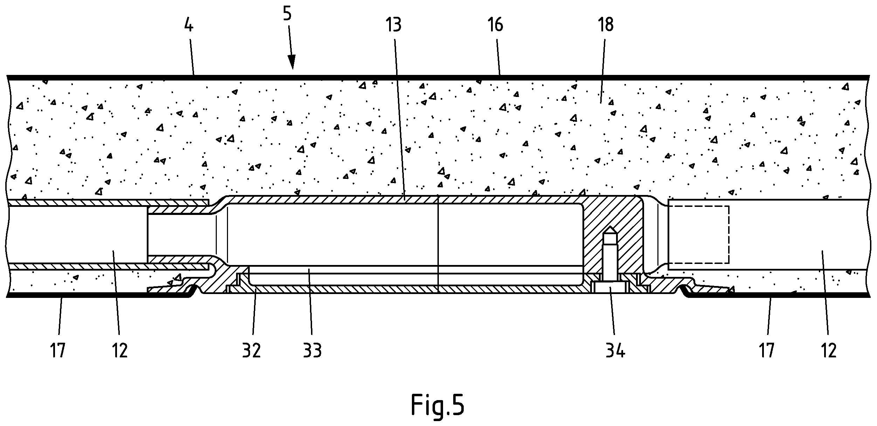

In der Fig. 5 ist exemplarisch ein in das Dachpaneel 5 eingelassenes Gehäuseelement 13 dargestellt. Das Gehäuseelement 13 ist wenigstens im Wesentlichen in die Kernlage 18 des Dachpaneels 5 eingebracht. Das Gehäuseelement 13 ist zudem angrenzend an der inneren Decklage 17 des Dachpaneels 5 angeordnet und mit dieser verbunden. Zudem ist das Gehäuseelement 13 auf gegenüberliegenden Seiten mit den angrenzenden Abschnitten des Kanals 12 des Dachpaneels 5 verbunden, wobei das dargestellte und insoweit bevorzugte Gehäuseelement 13 in die angrenzenden Abschnitte des Kanals 12 des Dachpaneels 5 eingesteckt ist. In dem Gehäuseelement 13 kann nachträglich eine Funktionskomponente montiert und mit einer durch den Kanal 12 des Dachpaneels 5 geführten Leitung 26 verbunden werden. Das Gehäuseelement 13 steht dabei nicht gegenüber der inneren Decklage 17 des Dachpaneels 5 in den Laderaum 15 vor, sondern ist bündig mit der inneren Decklage 17 des Dachpaneels 5 ausgebildet.

Das dargestellte und insoweit bevorzugte Gehäuseelement 13 weist ein Deckelelement 32 auf, das eine Zugangsöffnung 33 zum Inneren des Gehäuseelements 13 und damit zum Kanal 12 des Dachpaneels 5 verschließt und abdeckt. Das Deckelelement 32 kann jedoch von der die Zugangsöffnung 33 abdeckenden, geschlossenen Stellung in eine die Zugangsöffnung 33 freigebende, geöffnete Stellung und zurück verstellt werden. Um das Deckelelement 32 in die die Zugangsöffnung 33 freigebende geöffnete Stellung zu verstellen, müssen bei dem dargestellten Ausführungsbeispiel zunächst Schrauben 34 gelöst werden. Sodann kann das Deckelelement 32 abgehoben werden. Bedarfsweise kann das Deckelelement 32 nach der Montage einer Funktionskomponente in dem Gehäuseelement 13 wieder auf die Zugangsöffnung 33 aufgesetzt und dort in der die Zugangsöffnung 33 abdeckenden geschlossenen Stellung wieder verschraubt werden.

### Bezugszeichenliste

- 1: Kofferaufbau
- 2: Stirnwand
- 3: Stirnwandpaneel
- 4: Dach
- 5: Dachpaneel
- 6: Boden
- 7: Bodenpaneel
- 8: Seitenwand
- 9: Seitenwandpaneel
- 10: Rückwand
- 11: Rückwandtür
- 12: Kanal
- 13: Gehäuseelement
- 14: Verbindungskanal
- 15: Laderaum
- 16: äußere Decklage
- 17: innere Decklage
- 18: Kernlage
- 19: Eckadapter
- 20: Eckadapter
- 22: Umlenkbereich
- 23: Öffnung
- 24: Öffnung
- 25: Winkelelement
- 26: Leitung
- 27: Führungsfläche
- 28: Zugangsöffnung
- 29: Deckelelement
- 30: Leitungsende
- 31: Leitungsende
- 32: Deckelelement
- 33: Zugangsöffnung
- 34: Schraube

- N: Nutzfahrzeug
- Z: Zugmaschine

## Patentansprüche

1. Kofferaufbau (1) eines Nutzfahrzeugs, insbesondere Lastkraftwagen, Anhänger oder Sattelauflieger, mit wenigstens zwei miteinander wenigstens im Wesentlichen rechtwinklig verbundenen und einen Laderaum (15) begrenzenden Paneelen (3,5,7,9), wobei die wenigstens zwei Paneele (3,5,7,9) jeweils eine dem Laderaum (15) zugeordnete innere strukturgebende Decklage (17) , eine vom Laderaum (15) abgewandte äußere strukturgebende Decklage (16) und eine zwischen der inneren Decklage (17) und der äußeren Decklage (16) vorgesehene Kernlage (18) aufweisen und wobei die wenigstens zwei Paneele (3,5,7,9) jeweils wenigstens einen in die Kernlage (18) eingefügten Kanal (12) zur Aufnahme einer elektrischen, pneumatischen oder hydraulischen Leitung (26) aufweisen,
**dadurch gekennzeichnet, dass**
die wenigstens zwei Kanäle (12) der wenigstens zwei Paneele (3,5,7,9) untereinander über korrespondierend ausgebildete, angrenzend zueinander angeordnete und wenigstens im Wesentlichen in den Kernlagen der wenigstens zwei Paneele (3,5,7,9) aufgenommenen Eckadapter (19,20) unter Bildung eines gemeinsamen Verbindungskanals (14) verbunden sind.

2. Kofferaufbau nach Anspruch 1,
**dadurch gekennzeichnet, dass**
ein Paneel der wenigstens zwei Paneele (3,5,7,9) ein Seitenwandpaneel (9) und das andere Paneel ein Dachpaneel (5), ein Bodenpaneel (7) oder ein Stirnwandpaneel (3) ist und/oder das eine Paneel der wenigstens zwei Paneele (3,5,7,9) ein Stirnwandpaneel (3) und das andere Paneel ein Dachpaneel (5), ein Bodenpaneel (7) oder ein Seitenwandpaneel (9) ist.

3. Kofferaufbau nach Anspruch 1 oder 2,
**dadurch gekennzeichnet, dass**
die korrespondierenden Eckadapter (19,20) wenigstens abschnittsweise einen bündigen Übergang der beiden Kanäle (12) ineinander bereitstellen und/oder dass der wenigstens eine Eckadapter (19,20) an der dem Laderaum (15) abgewandten Seite bogenförmig mit einer Führungsfläche (27) zum Führen der Leitung (26) in Richtung des Kanals (12) des angrenzenden Eckadapters (20,19), insbesondere im Bereich des bündigen Übergangs, ausgebildet ist.

4. Kofferaufbau nach einem der Ansprüche 1 bis 3,
**dadurch gekennzeichnet, dass**
die Querschnitt der aneinandergrenzenden Öffnungen (23,24) der Eckadapter (19,20) wenigstens im Wesentlichen fluchtend zueinander ausgerichtet sind oder dass ein Querschnitt der aneinandergrenzenden Öffnungen (23,24) der Eckadapter (19,20) den anderen Querschnitt in einer Projektion der Querschnitte senkrecht zu wenigstens einem Querschnitt vollständig umfasst.

5. Kofferaufbau nach einem der Ansprüche 1 bis 4,
**dadurch gekennzeichnet, dass** wenigstens einem Eckadapter (19,20) eine mit einem Deckelelement (29) verschlossene Zugangsöffnung (28) zum Kanal (12) zugeordnet ist und dass das Deckelelement (29) von einer die Zugangsöffnung (28) abdeckenden geschlossenen Stellung in eine die Zugangsöffnung (28) freigebende geöffnete Stellung und zurück verstellbar vorgesehen ist.

6. Kofferaufbau nach einem der Ansprüche 1 bis 5,
**dadurch gekennzeichnet, dass** in wenigstens einem Paneel (3,5,7,9), insbesondere in jedem der beiden über den gemeinsamen Verbindungskanal (14) verbundenen Paneele (3,5,7,9), beabstandet von dem zugehörigen Eckadapter (19,20) wenigstens im Wesentlichen in der Kernlage (18) ein an den wenigstens einen Kanal (12) angeschlossenes Gehäuseelement (13) zur Montage einer Funktionskomponente darin vorgesehen ist und dass, vorzugsweise, das jeweilige Gehäuseelement (13) bündig in die innere Decklage (17) eingelassen ist.

7. Kofferaufbau nach Anspruch 6,
**dadurch gekennzeichnet, dass** dem wenigstens einen Gehäuseelement (13) eine mit einem Deckelelement (32) verschlossene Zugangsöffnung (33) zum Kanal (12) zugeordnet ist und dass das Deckelelement (32) von einer die Zugangsöffnung (33) abdeckenden geschlossenen Stellung in eine die Zugangsöffnung (33) freigebende geöffnete Stellung und zurück verstellbar vorgesehen ist.

8. Kofferaufbau nach einem der Ansprüche 1 bis 7,
**dadurch gekennzeichnet, dass** ein Paneel (3,5,7,9) mit wenigstens zwei, insbesondere auf einander gegenüberliegenden Rändern des einen Paneels (3,5,7,9), angrenzenden Paneelen (3,5,7,9) wenigstens im Wesentlichen rechtwinklig verbundenen ist, dass die wenigstens drei Paneele (3,5,7,9) jeweils wenigstens einen in einer Kernlage (18) zwischen einer strukturgebenden äußeren Decklage (16) und einer strukturgebenden inneren Decklage (17) eingefügten Kanal (12) zur Aufnahme einer Leitung (26) aufweisen, dass die Kanäle (12) der wenigstens drei Paneele (3,5,7,9) untereinander jeweils über korrespondierend ausgebildete und angrenzend zueinander angeordnete Eckadapter (19,20) unter Bildung von jeweils wenigstens zwei gemeinsamen Verbindungskanälen (14) verbunden sind.

9. Kofferaufbau nach Anspruch 8,
**dadurch gekennzeichnet, dass** in jedem der wenigstens drei Paneele (3,5,7,9) beabstandet von dem jeweils wenigstens einen zugehörigen Eckadapter (19,20) wenigstens im Wesentlichen in der Kernlage (18) ein an den wenigstens einen Kanal (12) angeschlossenes Gehäuseelement (13) zur Montage einer Funktionskomponente darin vorgesehen ist und dass, vorzugsweise, das jeweilige Gehäuseelement (13) bündig in die jeweilige innere Decklage (17) eingelassen ist.

10. Kofferaufbau nach Anspruch 8 oder 9,
**dadurch gekennzeichnet, dass** vier Paneele (3,5,7,9) an jeweils einander gegenüberliegenden Rändern mit jeweils zwei der anderen drei Paneele (3,5,7,9) wenigstens im Wesentlichen rechtwinklig verbunden sind, dass die vier Paneele (3,5,7,9) jeweils wenigstens einen in einer Kernlage (18) zwischen einer strukturgebenden äußeren Decklage (16) und einer strukturgebenden inneren Decklage (17) eingefügten Kanal (12) zur Aufnahme einer Leitung (26) aufweisen, dass die Kanäle (12) der wenigstens vier Paneele (2,5,7,9) untereinander über vier korrespondierend ausgebildete und angrenzend zueinander angeordnete Eckadapter (19,20) unter Bildung von wenigstens drei gemeinsamen Verbindungskanälen (14) verbunden sind.

11. Kofferaufbau nach Anspruch 10,
**dadurch gekennzeichnet, dass** in jedem der vier Paneele (3,5,7,9) beabstandet von dem jeweils wenigstens einen zugehörigen Eckadapter (19,20) wenigstens im Wesentlichen in der Kernlage (18) ein an den wenigstens einen Kanal (12) angeschlossenes Gehäuseelement (13) zur Montage einer Funktionskomponente darin vorgesehen ist und dass, vorzugsweise, das jeweilige Gehäuseelement (13) bündig in die jeweilige innere Decklage (17) eingelassen ist.

12. Kofferaufbau nach Anspruch 11,
**dadurch gekennzeichnet, dass**
die Kanäle (12) der vier Paneele (3,5,7,9) einen umlaufenden, ununterbrochenen Kanal (12) bilden

13. Kofferaufbau nach einem der Ansprüche 1 bis 12,
**dadurch gekennzeichnet, dass** die wenigstens eine Leitung (26) durch den wenigstens einen gemeinsamen Verbindungskanal (14) der wenigstens zwei Paneele (3,5,7,9) hindurchgeführt ist und dass, vorzugsweise, die wenigstens eine Leitung (26) nacheinander durch wenigstens zwei, vorzugsweise wenigstens drei, insbesondere wenigstens vier, gemeinsame Verbindungskanäle (14) hindurchgeführt ist.

14. Kofferaufbau nach einem der Ansprüche 1 bis 13,
**dadurch gekennzeichnet, dass**
in dem wenigstens einen Gehäuseelement (13), insbesondere in allen Gehäuseelementen (13), wenigstens eine Funktionskomponente vorgesehen ist und dass, vorzugsweise, die Funktionskomponenten über die wenigstens eine Leitung (26) miteinander verbunden sind.

15. Kofferaufbau nach einem der Ansprüche 6 bis 14,
**dadurch gekennzeichnet, dass**
die wenigstens eine Leitung (26) eine Signalleitung und/oder eine elektrische, pneumatische oder hydraulische Versorgungsleitung ist und/oder dass die wenigstens eine Funktionskomponente eine Leuchte, ein Scanner, ein Sender- und Empfängereinheit zum Detektieren von passiven oder aktiven RFID-Chips (Radio-Frequency Identification Chips), ein Rolltor und/oder eine Ladebordwand ist.

## Claims

1. Box body (1) of a commercial vehicle, in particular a truck, trailer or semi-trailer, with at least two panels (3, 5, 7, 9) connected to one another at least substantially at right angles and delimiting a load compartment (15), wherein the at least two panels (3, 5, 7, 9) each have an inner structuring cover layer (17) associated with the load compartment (15), an outer structuring cover layer (16) facing away from the load compartment (15), and a core layer (18) provided between the inner cover layer (17) and the outer cover layer (16), and wherein the at least two panels (3, 5, 7, 9) each have at least one channel (12) inserted into the core layer (18) for the reception of an electrical, pneumatic or hydraulic line (26),
**characterized in that**
the at least two channels (12) of the at least two panels (3, 5, 7, 9) are connected to one another via correspondingly formed corner adapters (19, 20) arranged adjacent to one another and accommodated at least substantially in the core layers of the at least two panels (3, 5, 7, 9), forming a common connecting channel (14).

2. Box body according to claim 1,
**characterized in that**
one panel of the at least two panels (3,5,7,9) is a side wall panel (9) and the other panel is a roof panel (5), a floor panel (7) or an end wall panel (3) and/or the one panel of the at least two panels (3,5,7,9) is an end wall panel (3) and the other panel is a roof panel (5), a floor panel (7) or a side wall panel (9).

3. Box body according to claim 1 or 2,
**characterized in that**
the corresponding corner adapters (19, 20) provide, at least in sections, a flush transition of the two channels (12) into one another and/or **in that** the at least one corner adapter (19, 20), on the side facing away from the load compartment (15), is formed in an arcuate shape with a guide surface (27) for guiding the line (26) in the direction of the channel (12) of the adjacent corner adapter (20, 19), in particular in the region of the flush transition.

4. Box body according to any one of claims 1 to 3,
**characterized in that**
the cross-section of the adjacent openings (23, 24) of the corner adapters (19, 20) are aligned at least substantially in alignment with each other or **in that** one cross-section of the adjacent openings (23, 24) of the corner adapters (19, 20) completely encompasses the other cross-section in a projection of the cross-sections perpendicular to at least one cross-section.

5. Box body according to any one of claims 1 to 4,
**characterized in that**
at least one corner adapter (19, 20) is associated with an access opening (28) to the channel (12), which is closed by a cover element (29), and **in that** the cover element (29) is provided so as to be adjustable from a closed position covering the access opening (28) into an open position exposing the access opening (28) and back.

6. Box body according to any one of claims 1 to 5,
**characterized in that**
in at least one panel (3, 5, 7, 9), in particular in each of the two panels (3, 5, 7, 9) connected via the common connecting channel (14), spaced apart from the associated corner adapter (19, 20) at least substantially in the core layer (18), a housing element (13) connected to the at least one channel (12) is provided for mounting a functional component therein,
and **in that**, preferably, the respective housing element (13) is embedded flush into the respective inner cover layer (17).

7. Box body according to claim 6,
**characterized in that**
the at least one housing element (13) is associated with an access opening (33) to the channel (12), which is closed by a cover element (32), and **in that** the cover element (32) is provided so as to be adjustable from a closed position covering the access opening (33) into an open position exposing the access opening (33) and back.

8. Box body according to any one of claims 1 to 7,
**characterized in that**
one panel (3,5,7,9) is connected to at least two adjacent panels (3,5,7,9), in particular on opposite edges of the one panel (3,5,7,9), at least substantially at right angles, that the at least three panels (3,5,7,9) each have at least one channel (12) inserted in a core layer (18) between an outer structuring cover layer (16) and an inner structuring cover layer (17) for receiving a line (26), **in that** the channels (12) of the at least three panels (3, 5, 7, 9) are connected to one another in each case via correspondingly formed corner adapters (19, 20) arranged adjacent to one another, forming in each case at least two common connecting channels (14).

9. Box body according to claim 8,
**characterized in that**
in each of the at least three panels (3, 5, 7, 9), spaced apart from the respective at least one associated corner adapter (19, 20) at least substantially in the core layer (18), a housing element (13) connected to the at least one channel (12) is provided for mounting a functional component therein, and **in that**, preferably, the respective housing element (13) is embedded flush into the respective inner cover layer (17).

10. Box body according to claim 8 or 9,
**characterized in that**
four panels (3, 5, 7, 9) are connected in each case at mutually opposite edges at least substantially at right angles to two of the other three panels (3, 5, 7, 9), **in that** the four panels (3, 5, 7, 9) each have at least one channel (12), inserted in a core layer (18) between an outer structuring cover layer (16) and an inner structuring cover layer (17), for the reception of a line (26), **in that** the channels (12) of the at least four panels (2, 5, 7, 9) are connected to one another via four correspondingly formed corner adapters (19, 20) arranged adjacent to one another, forming at least three common connecting channels (14).

11. Box body according to claim 10,
**characterized in that**
in each of the four panels (3, 5, 7, 9), spaced from the respective at least one associated corner adapter (19, 20), a housing element (13) for mounting a functional component therein, connected to the at least one channel (12) is provided at least substantially in the core layer (18), and **in that**, preferably, the respective housing element (13) is embedded flush into the respective inner cover layer (17).

12. Box body according to claim 11,
**characterized in that**
the channels (12) of the four panels (3,5,7,9) form a circumferential, uninterrupted channel (12).

13. Box body according to any one of claims 1 to 12,
**characterized in that**
the at least one line (26) is passed through the at least one common connecting channel (14) of the at least two panels (3, 5, 7, 9) and **in that**, preferably, the at least one line (26) is passed successively through at least two, preferably at least three, in particular at least four, common connecting channels (14).

14. Box body according to any one of claims 1 to 13,
**characterized in that**
at least one functional component is provided in the at least one housing element (13), in particular in all housing elements (13), and **in that**, preferably, the functional components are connected to one another via the at least one line (26).

15. Box body according to any one of claims 6 to 14,
**characterized in that**
the at least one line (26) is a signal line and/or an electrical, pneumatic or hydraulic supply line and/or **in that** the at least one functional component is a light, a scanner, a transmitter and receiver unit for detecting passive or active RFID chips (Radio-Frequency Identification Chips), a roller shutter and/or a tail lift.

## Revendications

1. Structure de coffre (1) d'un véhicule utilitaire, notamment un camion, une remorque ou une semi-remorque, avec au moins deux panneaux (3, 5, 7, 9) reliés entre eux, au moins essentiellement à angle droit, et délimitant un espace de chargement (15), lesdits au moins deux panneaux (3, 5, 7, 9) présentant chacun une couche de revêtement intérieure structurante (17) associée à l'espace de chargement (15), une couche de revêtement extérieure structurante (16) opposée à l'espace de chargement (15) et une couche centrale (18) prévue entre la couche de revêtement intérieure (17) et la couche de revêtement extérieure (16), et lesdits au moins deux panneaux (3, 5, 7, 9) présentent chacun au moins un canal (12) inséré dans la couche centrale (18) pour loger une ligne électrique, pneumatique ou hydraulique (26), **caractérisée en ce que** lesdits au moins deux canaux (12) desdits au moins deux panneaux (3, 5, 7, 9) sont reliés entre eux par le biais d'adaptateurs d'angle (19, 20), conçus de manière correspondante et agencés de manière adjacente l'un à l'autre, et logés au moins essentiellement dans les couches centrales desdits au moins deux panneaux (3, 5, 7, 9), en formant un canal de liaison (14) commun.

2. Structure de coffre selon la revendication 1, **caractérisée en ce qu'**un panneau desdits au moins deux panneaux (3, 5, 7, 9) est un panneau de paroi latérale (9) et l'autre panneau est un panneau de toiture (5), un panneau de plancher (7) ou un panneau de paroi frontale (3) et/ou **en ce qu'**un panneau desdits au moins deux panneaux (3, 5, 7, 9) est un panneau de paroi frontale (3) et l'autre panneau est un panneau de toiture (5), un panneau de plancher (7) ou un panneau de paroi latérale (9).

3. Structure de coffre selon la revendication 1 ou 2, **caractérisée en ce que** les adaptateurs d'angle (19, 20) correspondants fournissent, au moins par section, une liaison parfaite et nette des deux canaux (12) l'un dans l'autre et/ou **en ce que** ledit au moins un adaptateur d'angle (19, 20) est formé courbe sur le côté opposé à l'espace de chargement (15) avec une surface de guidage (27) permettant de guider la ligne (26) en direction du canal (12) de l'adaptateur d'angle adjacent (20, 19), notamment dans la zone de la liaison parfaite et nette.

4. Structure de coffre selon l'une quelconque des revendications 1 à 3, **caractérisée en ce que** les sections transversales des orifices adjacents (23, 24) des adaptateurs d'angle (19, 20) sont au moins essentiellement alignées entre elles ou **en ce qu'**une section transversale des orifices adjacents (23, 24) des adaptateurs d'angle (19, 20) comprend intégralement l'autre section transversale dans une projection des sections transversales perpendiculairement à au moins une section transversale.

5. Structure de coffre selon l'une quelconque des revendications 1 à 4, **caractérisée en ce qu'**au moins une ouverture d'accès (28) au canal (12), fermée par un élément de couvercle (29), est associée à au moins un adaptateur d'angle (19, 20) et **en ce que** l'on prévoit l'élément de couvercle (29) pouvant être réglé d'une position fermée recouvrant l'ouverture d'accès (28) en une position d'ouverture dégageant l'ouverture d'accès (28) et inversement.

6. Structure de coffre selon l'une quelconque des revendications 1 à 5, **caractérisée en ce que** l'on prévoit dans au moins un panneau (3, 5, 7, 9), notamment dans chacun des deux panneaux (3, 5, 7, 9) reliés via le canal de liaison commun (14), à une distance de l'adaptateur d'angle (19, 20) correspondant, au moins essentiellement dans la couche centrale (18), un élément de boîtier (13) raccordé à au moins un canal (12) pour le montage d'un composant fonctionnel et **en ce que**, de préférence, l'élément de boîtier (13) correspondant est encastré parfaitement dans la couche de revêtement intérieure (17).

7. Structure de coffre selon la revendication 6, **caractérisée en ce qu'**une ouverture d'accès (33) au canal (12), fermée par un élément de couvercle (32), est associée audit au moins un élément de boîtier (13), et **en ce que** l'on prévoit l'élément de couvercle (32) pouvant être réglé d'une position fermée recouvrant l'ouverture d'accès (33) à une position ouverte dégageant l'ouverture d'accès (33) et inversement.

8. Structure de coffre selon l'une quelconque des revendications 1 à 7, **caractérisée en ce qu'**un panneau (3, 5, 7, 9) est relié, au moins essentiellement à angle droit, à au moins deux panneaux (3, 5, 7, 9) adjacents, notamment sur des bords opposés l'un à l'autre de l'un des panneaux (3, 5, 7, 9), **en ce que** lesdits au moins trois panneaux (3, 5, 7, 9) présentent respectivement au moins un canal (12) inséré dans une couche centrale (18) entre une couche de revêtement extérieure structurante (16) et une couche de revêtement intérieure structurante (17) pour y loger une ligne (26), **en ce que** les canaux (12) desdits au moins trois panneaux (3, 5, 7, 9) sont reliés entre eux par des adaptateurs d'angle (19, 20) conçus de manière correspondante et agencés adjacents l'un à l'autre en formant respectivement au moins deux canaux de liaison communs (14).

9. Structure de coffre selon la revendication 8, **caractérisée en ce que** l'on prévoit dans chacun desdits au moins trois panneaux (3, 5, 7, 9), à une distance dudit au moins un adaptateur d'angle (19, 20) associé, au moins essentiellement dans la couche centrale (18), un élément de boîtier (13) raccordé à au moins un canal (12) pour le montage d'un composant fonctionnel et **en ce que**, de préférence, l'élément de boîtier (13) respectif est encastré parfaitement dans la couche de revêtement intérieure (17) respective.

10. Structure de coffre selon la revendication 8 ou 9, **caractérisée en ce que** quatre panneaux (3, 5, 7, 9) sont reliés respectivement, sur des bords opposés l'un à l'autre, par au moins deux des trois autres panneaux (3, 5, 7, 9), au moins essentiellement à angle droit, **en ce que** les quatre panneaux (3, 5, 7, 9) présentent chacun au moins un canal (12) inséré dans une couche centrale (18) entre une couche de revêtement extérieure structurante (16) et une couche de revêtement intérieure structurante (17), pour loger une ligne (26), **en ce que** les canaux (12) d'au moins quatre panneaux (2, 5, 7, 9) sont reliés entre eux par quatre adaptateurs d'angle (19, 20), conçus de manière correspondante et agencés l'un à l'autre, en formant au moins trois canaux de liaison communs (14).

11. Structure de coffre selon la revendication 10, **caractérisée en ce que** l'on prévoit dans chacun des quatre panneaux (3, 5, 7, 9), à une distance dudit au moins un adaptateur d'angle (19, 20) associé, au moins essentiellement dans la couche centrale (18), un élément de boîtier (13) raccordé à au moins un canal (12) pour le montage d'un composant fonctionnel et **en ce que**, de préférence, l'élément de boîtier (13) respectif est encastré parfaitement dans la couche de revêtement intérieure (17) respective.

12. Structure de coffre selon la revendication 11, **caractérisée en ce que** les canaux (12) des quatre panneaux (3, 5, 7, 9) forment un canal continu périphérique (12).

13. Structure de coffre selon l'une quelconque des revendications 1 à 12, **caractérisée en ce que** ladite au moins une ligne (26) est traversée par ledit au moins un canal de liaison commun (14) desdits au moins deux panneaux (3, 5, 7, 9) et **en ce que**, de préférence, ladite au moins une ligne (26) est traversée successivement par au moins deux, de préférence au moins trois, notamment au moins quatre canaux de liaison communs (14).

14. Structure de coffre selon l'une quelconque des revendications 1 à 13, **caractérisée en ce que** l'on prévoit dans au moins un élément de boîtier (13), notamment dans tous les éléments de boîtier (13), au moins un composant fonctionnel et **en ce que**, de préférence, les composants fonctionnels sont reliés entre eux par ladite au moins une ligne (26).

15. Structure de coffre selon l'une quelconque des revendications 6 à 14, **caractérisée en ce que** ladite au moins une ligne (26) est une ligne de signaux et/ou une ligne d'alimentation électrique, pneumatique ou hydraulique et/ou **en ce que** ledit au moins un composant fonctionnel est une lampe, un lecteur optique, un émetteur et un récepteur pour la détection de puces RFID (Radio-Frequency Identification Chips) passives ou actives, une porte roulante et/ou un hayon de chargement.
